# EUROPEAN PATENT SPECIFICATION

(11) **EP 0 768 924 B1**
(45) Date of publication and mention of the grant of the patent: **01.03.2000**
(21) Application number: 93923092.6
(22) Date of filing: 08.10.1993
(51) Int. Cl.: B05C 7/08, F16L 58/02

(54) **APPARATUS FOR COATING THE INNER SIDE OF TUBING WITH PROTECTIVE MATERIAL**
APPARAT ZUR BESCHICHTUNG DER INNEREN FLÄCHE VON ROHREN MIT EINEM SCHÜTZENDEN MATERIAL
APPAREIL UTILISE POUR ENDUIRE LA FACE INTERNE DE CANALISATIONS D'UN MATERIAU PROTECTEUR

(30) Priority: 09.10.1992 SE 9202980
(43) Date of publication of application: 23.04.1997
(73) Proprietor: EKLUND, Bror, S-136 72 Haninge (SE)
(72) Inventor: EKLUND, Bror, S-136 72 Haninge (SE)
(74) Representative: Lindgren, Anders
(86) International application number: SE9300817
(87) International publication number: WO9408728

(56) References cited:
- WO-A-89/12513
- GB-A- 2 028 459
- US-A- 2 194 701
- US-A- 2 261 928

## Description

The present invention relates to a tool for use in internal coating of tubing systems, preferably sewage systems in dwelling-houses, with a protective material.

The invention also relates to a guide brush intended for use together with the tool.

The invention also relates to an apparatus for coating the inside of tubes, comprising a tool and a guide brush according to the invention.

### BACKGROUND OF THE INVENTION

The tubing systems of dwelling houses, single-family houses as well as apartment blocks, will normally need to be reconditioned after appr. 30 years and possibly even earlier, whenever a damage has occurred in the tubing system. The cause may be e.g. deposits on the tube walls, corrosion, accumulation of various types of substances forming insoluble lumps, crack formations in the tubes giving rise to leaks, damp-related damages etc.

Such a reconditioning normally involves replacing of the entire tubing system, or at least a major portion thereof. The walls and floors will partially have to be torn down and provisional arrangements made, turning the dwelling in question into a reconditioning object for a period of appr. 4 weeks and possibly even longer. The cost of such a reconditioning is substantial.

### PRIOR ART

Some methods for cleaning tubes (e.g. WO 89/12513 and GB-A-2 028 459) as well as for coating tubes using special devices (e.g. US-2,194,701 and 2,261,928) are known from the patent literature. These methods will be briefly discussed below.

WO 89/12513 relates to an apparatus for cleaning tubes, which utilizes mechanical machining of the tube inside by means of propeller-like means driven by means of pressurized water. The water pressure also propels the device in a forward direction through the tubes. Although it is stated that the apparatus be provided with a flexible coupling to facilitate the manoeuvering at bends, the way this control should be carried out is not described, and it is likely to be very difficult to achieve manoeuvering in an easy manner by use of the device described. It is impossible to practice this invention for coating tubes, while satisfying the requirement for adapting the device to dimensional changes, branchings and bends.

GB-2 028 459 relates to a machine for removing deposits from the interior of tubings. The machine consists of a carriage having a motor, which drives a rotor on which short chains are mounted. At the end of the chains, weights knocking off material accumulated on the tube wall are arranged. The carriage is pulled by means of a wire or the like. The design of this machine probably makes it very difficult, if not impossible, to take the machine around a tube bend, and it is definitely impossible to guide it.

US-2,261,928 relates to an apparatus for coating primarily water and sewage lines with a protective coating, such as cement, and for its levelling. The apparatus consists of a carriage guided through the line, a coating material supply line and an discharge means at the end of the line. The carriage also supports a mixing container for mixing coating material. The container accommodates paddles effecting the mixing. The material is passed on to the discharge means by means of a screw feeder device. Further, a hub is arranged on a rotating shaft, which hub is provided with a number of long, spoke-like elements at the ends of which trowel-like means are arranged. These trowel-like means serve to level out the coating. The structure is very complicated, apparently being intended for large dimension tubings.

It is further known to coat the inside of tubes with a protective layer of a high-viscous hardenable polymer pushed through the system, whereby the tube sides are coated.

So called "re-lining" of public tubing systems is also known. The coating then is carried out by spraying a glass fibre reinforced plastic material onto the tube walls.

### OBJECT OF THE INVENTION

The object of the present invention is to provide a method and an apparatus for coating the inside of tubes, particularily sewage tubes, which does not present any of the drawbacks associated with the methods and devices mentioned above.

The method and apparatus according to the invention should i) permit short-time reconditioning of tubing systems resulting in a minimum of inconvenience to people living in the apartment being reconditioned, ii) be structurally simple, thus being inexpensive, iii) be guidable in a desired direction within a tubing network having a number of branch tubes and iv) adapt to changes in tube dimension without the need of any particular intervention in the device and its components.

These objectives are achieved with a method, tool and apparatus as defined in claims 1, 3 and 10 respectively.

The invention will now be described in detail with reference to the appended drawings, wherein
Fig. 1A and 1B schematically shows a tubing system in a building;
Fig. 2 shows a cross-section of a floor drain;
Fig. 3 schematically shows the device of the invention in use;
Fig. 4 is a partly cut-away side view of the device according to the invention;
Fig. 5 is a sectional view of the device at V-V of Fig. 4;
Fig. 6 shows the coating means in detail;
Fig. 7A-C respectively show a front view, a top view and a perspective view of the guiding brush in detail; and
Fig. 8 is a diagram showing the performance required from the flexible shaft.

### DESCRIPTION OF PREFERRED EMBODIMENTS

The present invention primarily has its application in sewage tubing systems of dwelling houses, single-family houses as well as apartment blocks, and will be described in connection there-with.

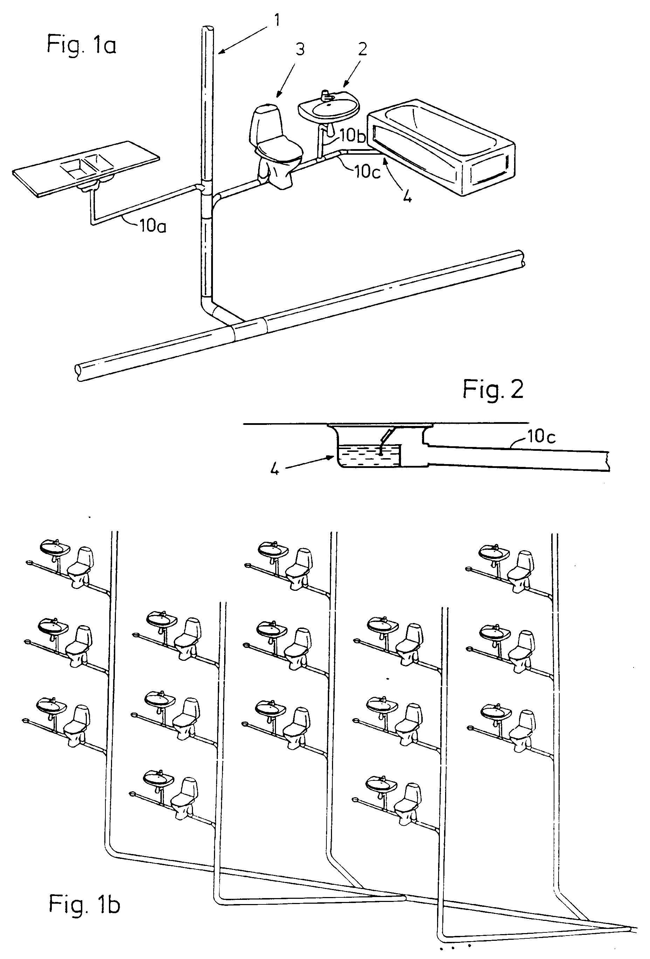

Fig. 1A schematically shows the tubing in a bathroom, having a main line 1 and branchings to wash-basin 2, toilet 3 and a floor drain 4 for, e.g., a bath tub, as well as the changes in dimension that are present within the system. The dimensions in question are in the tube diameter range from 40 mm and up to, e.g., 225 mm. One of the problems present when working inside tubings is precisely associated with the capability of the equipment to accommodate said dimensional changes while preventing the equipment from getting stuck or seizing as it is passed through the tubes.

First of all, the method for coating tubes according to the invention will now be described with reference to Fig. 1A, 1B, 2 and 3.

The device 5 being used and to be described in detail below, substantially consists of a coating material supply line 6, a pump 34 for pumping material through the line, a flexible shaft 7 for driving (at least)one rotating tool 8 and a guide brush 9, which are arranged at the distal end of the device. The rotation is generated, e.g., by means of an electric motor, most conveniently by coupling a portable drilling machine 12 of the conventional type to the flexible shaft 7 by means of a suitable coupling. The motor should have an continuously variable rotational speed, such as 100 - 2000 rpm, and should be provided with a torque selector and drivable in right-hand as well as left-hand rotation.

Presently, there is no problem in reaching up to appr. 10 m into the tubing system by means of the device 5, this being completely adequate in order to manage to recondition a tubing system of one floor level in a normal apartment house. In particular applications, it is possible to reach substantially further. It is, for instance, possible to conceive a range of up to 30 m in vertical rain water lines.

As the coating, a resin modified, two-component, high-viscous, curable polymer on an epoxy base is preferably used. An example of a preferred polymer is the ElastoCoat T 30 B (manufactured by Zel-Aaren Innovation AB, Sweden). The viscosity has to be sufficiently high in order to permit the coating material to form a sufficiently thick coating. Being sufficiently thick is means ranging between 0.5 and 2 mm, preferably 1.5 mm. The viscosity must not be to high, nor to low, since, in the former case, it would be impossible to drive the device through the tubing system. In the latter case, it would be impossible to obtain the thickness required without repeating the method several times, which would be time-consuming and costly.

Prior to the coating process itself, the tubing system needs to be cleaned out. This can be achieved mechanically, and may be carried out by means of the device according to the invention using, however, a tool, which is reinforced by hard metal or diamond ( this will be described more in detail below). High-pressure flushing may also be taken into consideration. Following the mechanical cleaning-out the tubes will be flushed. Then, the tubes are dried, e.g. by hot air, and finally, the tubes are inspected by means of filming with a video camera, such as a micro film camera, also by use of the device according to the invention. The micro film camera is arranged at the distal end of the device, and is connected to a video unit and a display by means of a coaxial cable. It is also possible to conceive a lens alone being provided, the picture then being transmitted by optical fibers to a conventional, externally located video equipment.

When practicing the coating method, the side tubes (10a-c i Fig. 1) will generally first be dealt with by coating them with polymer mass, after which the main line 1 will be coated.

In order to have access internally in the tubing 10c in a floor drain 4 ( see Fig. 2), an access hole 11 will have to be made, which will be closed again by means of, for instance, a rubber seal having a plug upon completion of the reconditioning.

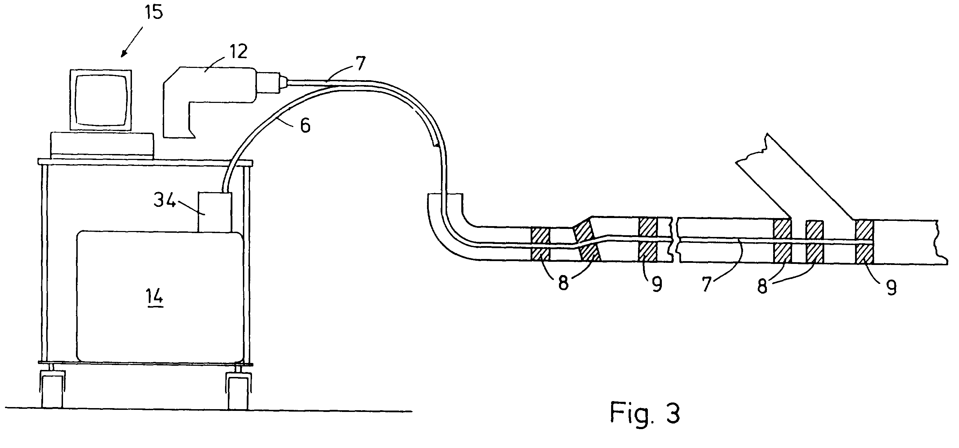

The device 5 is introduced in the tube line 10b (Fig. 3; e.g. the sewage from a floor drain 4 underneath a bath tub) and the motor (the drilling machine) is actuated. Thanks to the particular design of the guide brush 9 (to be described below), the introduction will be facilitated, since the tool 8 will partially be pulled into the line by the screwing brush. A manual feeding will still have to be made. Once the lower end of the tube to be coated has been reached, the feeding-out of polymer mass 13 will be initiated. The mass will be fed out through the opening of the supply line 6, the mass 13 accumulating in front of the tool 8 (as seen in the direction pointing back towards the beginning of the tubing 10). There will be no need for a special nozzle. As soon as a sufficient amount of mass has been fed out, the device 5 will be retracted over a distance, the tool 8, provided with distributor means 18, working the mass and achieving a distribution of the mass across the inside wall of the tube. During the coating operation, the rotational speed will suitably be 800 - 1000 rpm.

Sometimes, "bulges" are formed during the coating operation. In order to level out these "bulges", the device will be moved back over a distance at a decreased rotational speed, appr. 300-500 rpm. During this stage of levelling-out, the supply of polymer mass will be shut off.

Upon having been confirmed that the coating is sufficient through the inspection of the coating by video camera, the coating of a following section will follow.

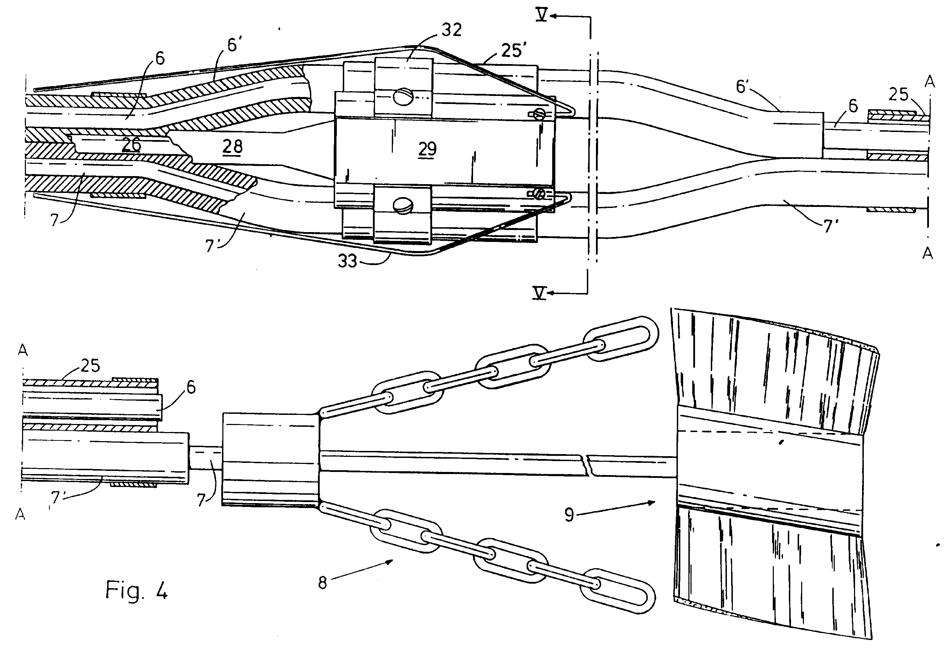

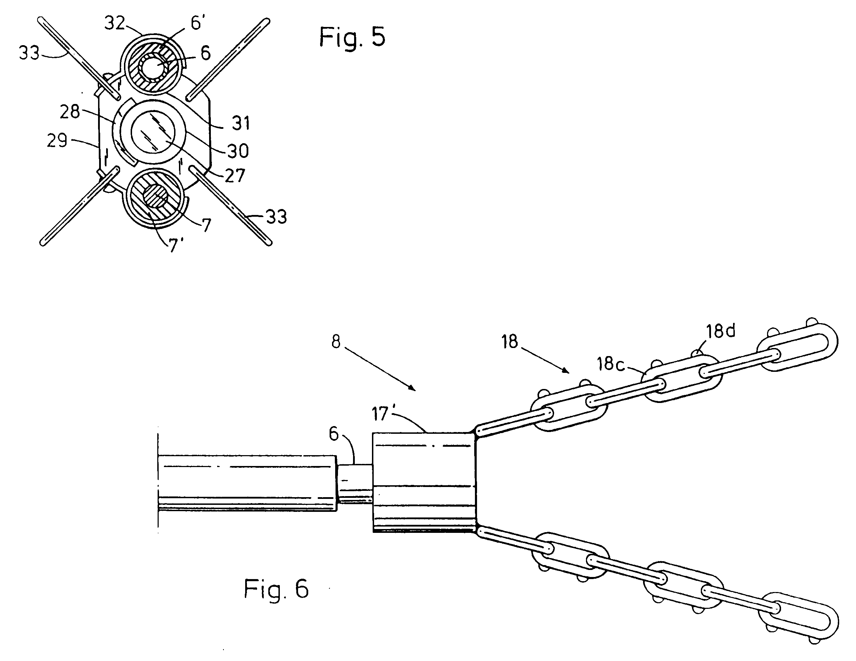

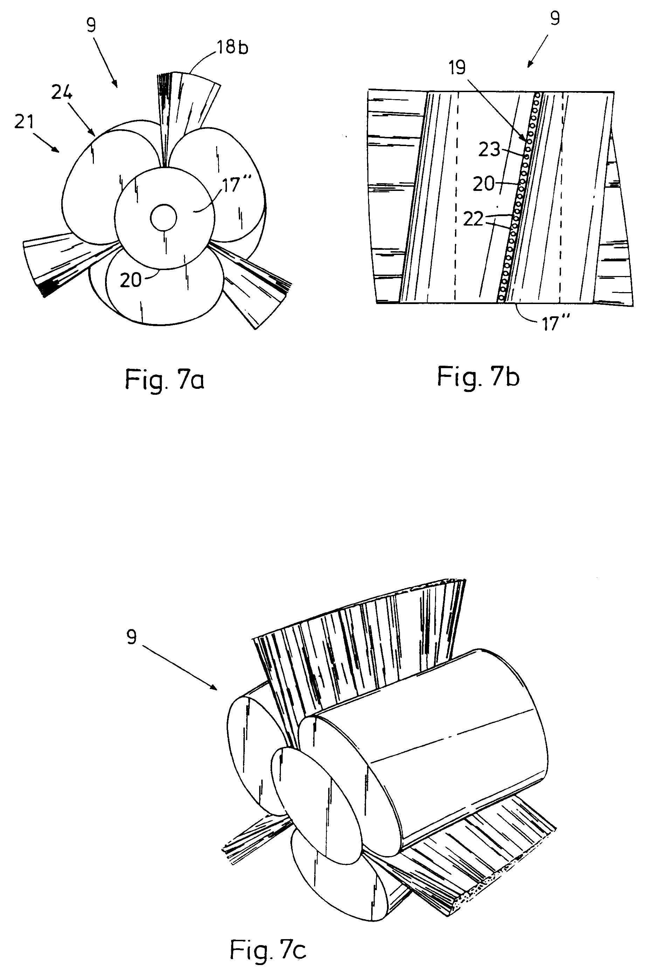

A detailed description of the device according to the invention will now be given here below in connection with Fig. 3 - 7.

The apparatus, which as a whole is referred to by the number 5, comprises a coating material supply line 6, a flexible shaft 7 for driving (at least) one rotating tool 8 and a guide brush 9, which are arranged at the distal end of the device. A container 14 for polymer mass, a video unit 15 and the motor 12 are mounted on a support or frame 16, which may be provided with wheels. A flexible shaft is connected to the motor, and the tool 8 of the invention is located at the end of the shaft 7.

The tool 8 substantially comprises a cylindrical core 17', which is mounted on the flexible shaft 7 by means of a locking screw and on which flexible elements 18 are attached in such a way as to be substantially free-moving, These elements 18 may consist of articulated elements, such as short chains 18a, or bristle 18b made of nylon and/or steel. An essential feature of these elements is that they have an extension exceeding the interior tube diameter by appr. 10%, as they follow the round core 17' in rotation. At the same time, they are required to adapt to dimensions, which are appr. 45% smaller, without interfering with the forward drive of the device within the tube.

The function of the flexible elements 18, 18a, 18b is to force polymer mass fed out in the tube out towards the tube wall and to distribute it evenly onto the wall to form a uniform coating having a thickness of appr. 1.5 mm.

It is presently preferred to use chains 18a as articulated or flexible elements during the coating operation itself, since the torque of the chains will be low enough to permit that the coating operation be accomplished without any hindrance. Further, the chains easily adapt to changes in dimensions of, e.g., the tubing system.

It is however possible to use a brush having a structure similar to that of the guide brush 9 (to be described), as an alternative to the chain structure described above, but the torque will then be to high in certain situations, and the passing of the apparatus through the tubes will become sluggish.

According to one embodiment, which will preferably be used in connection with small tube dimensions, only two brushes 9, and thus no chains, are provided.

According to a preferred embodiment of the tool, two sets of chains are provided. In connection herewith, the additional set is provided between the outer brush and the first rotating chains, within the preferred distance indicated below in connection with the description of the guide brush.

By arranging a planetary gear between two identical sets of chains, it is possible to achieve, that these sets rotate in different directions and even at different rotational speeds. This may be advantageous in order to provide a coating to certain portions, which end up in the "shade" during a coating operation effected by means of a single set of chains. This "shade" may be found, for instance, in tube wall cavities caused by corrosion, or minor bulges or obstacles caused by deposits, which were not eliminated in the initial cleaning operation. When using a single set of chains only, this "shade" will be levelled-out through passing the tool back and through coating from the opposite direction.

The tool may also be used in the initial cleaning step to remove hard deposits from the tubes, the chains 18a being replaced by hard-metal reinforced or diamond reinforced chains 18c. The reinforcements may adopt the form of small hard-metal tips 18d.

Spaced apart from said tool 8 by a distance, which is greater than the greatest opening formed at a branching, by which the brushes may pass, along the shaft 7 in the distal direction, at least one guide brush 9 provided with nylon and/or steel bristle 18b is provided. Since the bristles 18b have a certain rigidity, this guide brush 9 serves to center the assembly of shaft/supply line within the tube. The brush 9 further contributes in driving the entire assembly in a forward (or backward) direction within the tube as well as in providing a guiding in a desired direction. Driving, and guiding, which is an important feature of the invention, is provided through the bristles 18b being arranged along an "oblique" line 19 in an axial direction on the peripheral envelope surface 20 of the cylindrical core 17'', so that reversing the rotational speed will lead to the guide brush 9 screwing in an opposite direction. The brush 9 will further tend to turn right and left, respectively, depending on the rotational direction, and the entire assembly may thus be turned around a branch tube.

A problem, that may occur, is that the bristle 18b break very easily or at least will be bent during the rotation. In order to eliminate this problem, support elements 21 are provided axially on the core 17''. These elements lie axially somewhat obliquely, and are arranged spaced apart by a small spacing 22, the bristle 18b being anchored in slits 23 in the core 17'' in the spacings 22. The core 17'' as well as the support elements 21 may be manufactured in, e.g., nylon. The envelope surfaces 24 of the support elements are designed substantially as ellipsoids, the tangent of the envelope surfaces 24 of the support elements 21 at the point of contact with the core 17'' forming a substantially right angle.

The radial extension of the support elements 21 is such, that the diameter of the circle capable of circumscribing the entire brush core (core 17'' plus support elements 21) will be appr. 10% smaller than the smallest tube dimension, through which the brush is to be passed.

The characteristics of the flexible shaft are of major importance to the function of the apparatus. Namely, the shaft will have to be capable of transmitting a torque, which is sufficient for turning the tool 8, without being deformed itself, while not being too rigid so as to prevent it from being sufficiently bent in a branch tube. Thus, the shaft will have to permit flexing to a radius of curvature of appr. 50 mm without being deformed. Else, there is a risk of the shaft tending to "take a shortcut" in the branch tube, which may cause an uneven coating of the tube walls in the area around the branching.

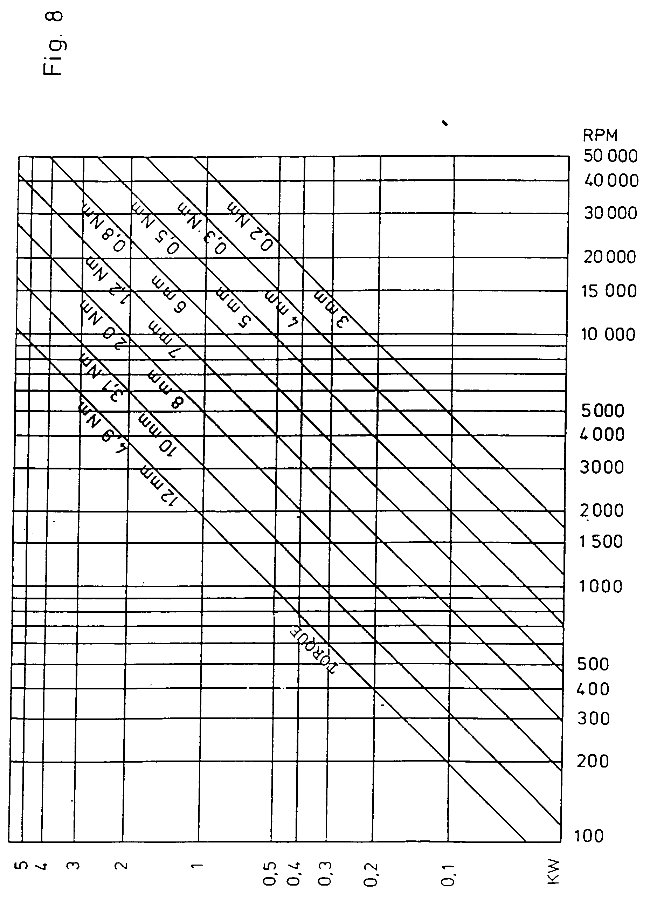

It has been found that the shaft 7 should have the characteristics indicated in the diagram of Fig. 8, i.e. being able to transmit a torque V of up to 4.9 Nm (with respect to the larger tube dimensions) when effecting coating (at which the shaft will be rotating at 800 - 1 000 rpm) without being deformed. Further, the shaft must be able to flex to a radius of 50 mm without being deformed. With respect to the smaller tube dimensions, a torque of 0.8 Nm will be sufficient.

Since it is impossible for a flexible shaft 7 to have characteristics, that cover the entire range of transmittable torques, in combination with the desired radius of curvature, it may be necessary to replace the shafts at different tube dimensions. Fig. 8 shows a diagram of different shafts which may be used in the apparatus according to the invention and their characteristics ( dimension, transmittable torque at different rotational speeds).

A coating mass supply line 6 is extending parallel to the flexible shaft 7. The shaft 7, which is housed in a sleeve 7', and the supply line 6, which also is housed in a sleeve 6', are kept together by means of, for instance, tape, straps or any other attachment or clamping means.

The supply line 6 has a telescoping outer sleeve 25 at the discharge end. This may be necessary due to the fact, that the supply line and the shaft may adopt different radii in a tube bend, whereby, given that the line 6 was unable to adapt to the curvature, the discharge orifice thus would be displaced with respect to the shaft. This sleeve 25 is secured on the casing of the flexible shaft, so that the discharge orifice will remain in a fixed position with respect to the shaft.

A coaxial cable 26 connected at its end to a miniaturized video camera (a micro film camera) 27 extends between the supply line 6 and the shaft 7 in parallel therewith. The coaxial cable is connected to a video unit 15 having a display. A (fibre optical) light guide also extends in parallel therewith and is connected to a light source in order to provide lighting to the tube inside and intended for the inspection by means of the video camera.

The four components, supply line 6, shaft 7, coaxial cable 26 and light guide 28, are kept together by means of a holder 29. This holder may consist of an aluminum block 29 having a central through hole 30, in which the coaxial cable 26 and the light guide 28 extend and in which the micro film camera 27 is positioned. The holder is provided with exterior bowl-shaped recesses or notches 31 located on opposing sides of the holder 29, in which recesses or notches the supply line and the shaft 7 respectively rest. The latter is fixed by means of a clamping means 32. Centering springs 33 are attached within the holder 29. These springs may be shaped as clamps of, e.g., metal wire having a fix point of attachment at one end and being able to slide along the cabling at the other end. They will thereby ensure that the holder assembly 29, 6, 7, 26, 28 will lie centered within the tube. Since the clamps are resilient, they may accommodate dimensional changes without any problem.

In a way corresponding to the situation at the discharge end, a telescoping sleeve 25' is provided before the holder assembly 26 - 29 in order to adapt the cabling to bending.

A reel for winding the cabling may also be provided on the frame or support 16, which support in practice consists of a small carriage.

## Claims

1. A method for coating the inside of a tube, such as in a sewage tubing system in residential buildings, with a protective material, comprising the following steps:
a) pumping a curable polymer mass having a high viscosity in a tube to a discharge location;
b) forcing the polymer mass by means of a rotating tool to form a homogenous coating having a thickness of 0.5 - 2.0 mm, preferably 1.5 mm, on the inside wall of the tube;
c) displacing the mass discharge location to a point at which no coating has been applied; and
d) repeating the steps a) - c) until the entire tube has been covered by a homogenous coating.

2. The method according to claim 1, wherein the passage through branchings and discharge tubes is achieved without hindrance through use of an apparatus according to claim 10.

3. A tool (8) for coating the inside of tubes (10a, 10b, 10c) with protective materials and designed to be arranged at one end of a supply line (6) having a discharge orifice for coating material, as well as to be connected to a rotary movement generating means (7, 12), comprising
at least one rotatable means (17), arranged adjacent to the discharge orifice and provided with distributor means (18), to provide a distribution of the protective coating material fed out onto the tube wall, as the rotatable means (17) rotates; and
at least one rotatably arranged guiding means (9), which, dependent of the direction of rotation, guides the tool (8) in a desired direction, as it is moved within a tube.

4. The tool according to claim 3, wherein the distribution means (18) consist of elongated, articulated elements (18a) arranged along the periphery of the rotatable means (17) and propelled outwardly towards the tube walls attaining contact therewith as the rotatable means (17) rotates.

5. The tool according to claim 4, wherein the distribution means are chains (18a) having at least 2, preferably 2 - 15, most preferably 2-10 links.

6. The tool according to claim 3, wherein the distribution means (18) is bristle (18b) of nylon and/or steel.

7. The tool according to any of claims 3-6, wherein the guiding means is a rotating brush (9), to be connected to a rotary movement generating means (7, 12), and arranged so as to screw itself in a forward or reverse direction in the tube when rotating, dependent of the direction of rotation.

8. The tool according to claim 7, wherein said brush comprises
a cylindrical core (17) for connection to the rotary movement generating means (7, 12);
a set of bristle (18b) projecting, substantially radially, from the envelope surface of the core (17), and
wherein the bristles (18b) are arranged in a row, so that a horizontal projection of their points of attachment across the envelope surface corresponds to a straight line having, however, its initial point and final point displaced to one another, so that a pitch corresponding to 0.5 - 2 revolutions per 250 mm, and preferably 1 revolution per 250 mm, is obtained.

9. The tool according to claim 8, wherein the brush is provided with 3 - 5, preferably 3 sets of bristle (18b).

10. An apparatus for coating the inside of a tube, comprising
a pump (34) for pumping coating material from a container (14) and through a coating material supply line (6);
an elongated, flexible means (7), e.g. a wire or a flexible shaft, connected to a tool (8) according to any of claims 3 - 9, the flexible means being designed to transmit a rotary movement from a motor (12) to the tool (8) and being capable of being flexed to a radius of curvature R of 50 mm without being deformed.

11. The apparatus according to claim 10 modified so that the shaft (7) has a thicker dimension providing the ability to flex to a radius of curvature of 75 mm.

## Patentansprüche

1. Verfahren zum Beschichten der Innenseite eines Rohres, z.B. in einem Abwasserrohrsystem in Wohngebäuden, mit einem schützenden Material, mit den folgenden Schritten:
a) Pumpen einer aushärtbaren Polymermasse mit einer hohen Viskosität in ein Rohr zu einer Abgabestelle;
b) Treiben der Polymermasse mittels eines Drehwerkzeugs zum Bilden einer homogenen Beschichtung mit einer Dicke von 0,5 - 2,0 mm, vorzugsweise 1,5 mm, auf der Innenwand des Rohres;
c) Verlagern der Massenabgabestelle an einen Punkt, an dem keine Beschichtung aufgebracht worden ist;
d) Wiederholen der Schritte a)-c), bis das ganze Rohr von einer homogenen Beschichtung bedeckt worden ist.

2. Verfahren nach Anspruch 1, bei dem der Durchgang durch Abzweigungen und Abgaberohre ohne Behinderung durch Benutzen einer Vorrichtung nach Anspruch 10 erreicht wird.

3. Werkzeug (8) zum Beschichten der Innenseite von Rohren (10a, 10b, 10c) mit schützenden Materialien und ausgebildet sowohl zur Anordnung an einem Ende einer Zufuhrleitung (6) mit einer Abgabeöffnung für Beschichtungsmaterial als auch zur Verbindung mit einer eine Drehbewegung erzeugenden Einrichtung (7, 12) mit
zumindest einer drehbaren Einrichtung (17), die nahe der Abgabeöffnung angeordnet und mit einer Verteileinrichtung (18) versehen ist, um eine Verteilung des auf die Rohrwand zugeführten schützenden Materials zu erreichen, wenn sich die drehbare Einrichtung (17) dreht; und
zumindest einer drehbar angeordneten Führungseinrichtung (9), die abhängig von der Drehrichtung das Werkzeug (8) in eine gewünschte Richtung führt, wenn es innerhalb eines Rohres bewegt wird.

4. Werkzeug nach Anspruch 3, bei dem die Verteileinrichtung (18) aus länglichen, gelenkigen Elementen (18a) besteht, die entlang dem Umfang der drehbaren Einrichtung (17) angeordnet und nach außen gegen die Rohrwände angetrieben sind, um Kontakt mit ihnen zu erreichen, wenn sich die drehbare Einrichtung (17) dreht.

5. Werkzeug nach Anspruch 4, bei dem die Verteileinrichtung Ketten (18a) mit zumindest 2, vorzugsweise 2 - 15 und ganz vorzugsweise 2 - 10 Gliedern aufweist.

6. Werkzeug nach Anspruch 3, bei dem die Verteileinrichtung (18) eine Bürste (18b) aus Nylon und/oder Stahl ist.

7. Werkzeug nach einem der Ansprüche 3 bis 6, bei dem die Führungseinrichtung eine Drehbürste (9) ist, die mit einer eine Drehbewegung erzeugenden Einrichtung (7, 12) zu verbinden und so angeordnet ist, dass sie sich beim Drehen abhängig von der Drehrichtung selbst in einer Vorwärts- oder Rückwärtsrichtung in dem Rohr durchschraubt.

8. Werkzeug nach Anspruch 7, bei dem die Bürste aufweist,
einen zylindrischen Kern (17) zur Verbindung mit der eine Drehbewegung erzeugenden Einrichtung (7, 12);
einen Satz von Borsten (18b), die im wesentlichen radial von der Umfangsfläche des Kerns (17) abstehen, und
wobei die Borsten (18b) in einer Reihe angeordnet sind, so dass eine horizontale Projektion ihrer Angreifpunkte über die Umhüllungsfläche einer geraden Linie entspricht, die jedoch ihren Anfangs- und ihren Endpunkt voneinander versetzt hat, so dass eine Steigung entsprechend 0,5 - 2 Umdrehungen per 250 mm und vorzugsweise von 1 Umdrehung per 250 mm erhalten ist.

9. Werkzeug nach Anspruch 8, bei dem die Bürste 3 - 5, vorzugsweise 3 Borstensätze (18b) aufweist.

10. Vorrichtung zum Beschichten der Innenseite eines Rohres,
mit einer Pumpe (34) zum Pumpen des Beschichtungsmaterials von einem Behälter (14) und durch eine Beschichtungsmaterial-Zufuhrleitung (6);
einer langgestreckten, flexiblen Einrichtung (7), z.B. einem Draht oder einer flexiblen Welle, verbunden mit einem Werkzeug (8) gemäß einem der Ansprüche 3 - 9, wobei die flexible Einrichtung ausgebildet ist, um eine Drehbewegung von einem Motor (12) auf das Werkzeug (8) zu übertragen und fähig ist, auf einen Krümmungsradius R von 50 mm ausgebogen zu werden, ohne deformiert zu werden.

11. Vorrichtung nach Anspruch 10 in solcher Abwandlung, dass die Welle 7 dicker ist zur Schaffung der Eignung, auf einen krümmungsradius von 75 mm auszubiegen.

## Revendications

1. Procédé pour recouvrir l'intérieur d'un tube tel que par exemple dans un système de canalisation d'égouts dans des immeubles d'habitation avec une matière de protection comprenant les étapes de:
a) pompage d'une masse de polymère vulcanisable (〈〈 curable 〉〉) présentant une viscosité élevée dans un tube jusqu'à un endroit de déversement;
b) Contrainte (〈〈 forcing 〉〉) de la masse de polymère au moyen d'un outil rotatif afin qu'elle forme un revêtement homogène présentant une épaisseur de 0,5 à 2,0 mm, de préférence de 1,5 mm sur la paroi interne du tube;
c) déplacement du lieu de déversement à un endroit où aucun revêtement n'a été appliqué ; et
d) répétition des étapes a) à c) jusqu'à ce que le tube en entier soit recouvert par un revêtement homogène.

2. Procédé selon la revendication 1, caractérisé en ce que le passage au travers de ramifications et de tubes de déversement est réalisé sans entrave durant l'usage de l'appareil selon la revendication 10.

3. Outil (8) pour recouvrir l'intérieur de tubes (10a, 10b, 10c) avec des matières protectrices et qui est conçu pour être disposé à une extrémité d'une ligne d'alimentation (6) qui présente une ouverture de déversement pour de la matière de revêtement et qui peut être connecté à un moyen qui génère un mouvement rotatif (7,12), comprenant
au moins un moyen tournant (17), disposé de manière adjacente à l'ouverture de déversement, et muni de moyens de distribution (18) afin de procurer une distribution de la matière de revêtement protectrice qui est délivrée sur la paroi du tube, lorsque le moyen tournant (17) tourne ; et
au moins un moyen de guidage disposé de manière rotative (9) qui, en fonction du sens (〈〈 direction 〉〉) de rotation, guide l'outil (8) dans la direction désirée lorsqu'il est mis en mouvement à l'intérieur du tube.

4. Outil selon la revendication 3, caractérisé en ce que les moyens de distribution (18) consistent en des éléments allongés, articulés (18a) disposés le long de la périphérie du moyen tournant (17) et qui sont poussés vers l'extérieur contre les parois du tube, entrant en contact avec celles-ci lorsque le moyen tournant (17) tourne.

5. Outil selon la revendication 4, caractérisé en ce que les moyens de distribution sont des chaînes (〈〈 chains 〉〉) (18a) qui présentent au moins 2, de préférence de 2 à 15, de manière plus préférée de 2 à 10 chaînons (〈〈 links 〉〉).

6. Outil selon la revendication 3, caractérisé en ce que le moyen de distribution (18) est de la fibre (〈〈 bristle 〉〉) (18b) de nylon et/ou d'acier.

7. Outil selon l'une quelconque des revendications 3 à 6, caractérisé en ce que le moyen de guidage est une brosse tournante (9) qui est connectée à un moyen qui génère un mouvement tournant (7,12) et conçu de telle manière à ce qu'il se visse lui-même en rotation lorsqu'il avance ou recule dans le tube, ceci en fonction du sens (〈〈 direction 〉〉) de rotation.

8. Outil selon la revendication7, caractérisé en ce que ladite brosse comprend :
une partie centrale cylindrique (17) pour se connecter à un moyen qui génère une rotation (7,12);
un jeu de fibres (18b) qui fait saillie de manière substantiellement radiale à partir de la surface d'enveloppe de la partie centrale (17), et
caractérisé en ce que les fibres (18b) sont disposées en rang, de telle manière que la projection horizontale de leurs points d'attache à travers l'enveloppe de surface correspond à une ligne droite présentant cependant un point de départ et un point d'arrivée décalés l'un par rapport à l'autre, de telle sorte que l'on obtient un pas correspondant à 0,5 à 2 révolutions pour 250 mm et de préférence 1 révolution pour 250 mm.

9. Outil selon la revendication (8), caractérisé en ce que la brosse est munie de 3 à 5, de préférence de 3 jeux de fibres (18b).

10. Appareil pour recouvrir l'intérieur d'un tube comprenant,
une pompe (34) pour le pompage d'une matière de revêtement à partir d'un réservoir (14) et à travers une ligne d'alimentation (6);
un moyen allongé et flexible (7) par exemple un câble ou un arbre flexible connecté à un outil (8) selon l'une quelconque des revendications 3 à 9, le moyen flexible étant conçu pour transmettre un mouvement tournant à partir d'un moteur (12) à l'outil (8) et qui est capable de se courber avec un rayon de courbure (〈〈 a radius of curvature 〉〉) R de 50 mm sans être déformé.

11. Appareil selon la revendication 10, caractérisé en ce qu'il est modifié de telle sorte que l'arbre (7) présente une dimension plus fine permettant une courbure avec un rayon de courbure de 75 mm.
